# FASCICULE DE BREVET EUROPEEN

(11) **EP 3 585 631 B1**
(45) Date de publication et mention de la délivrance du brevet: **16.09.2020**
(21) Numéro de dépôt: 18710109.2
(22) Date de dépôt: 26.02.2018
(51) Int. Cl.: B60D 1/00

(54) **MODULE LOGISTIQUE ROULANT MUNI D'UN DISPOSITIF D'ATTELAGE**
BERÄDERTES LOGISTIKMODUL MIT EINER ABSCHLEPPVORRICHTUNG
WHEELED LOGISTICAL MODULE PROVIDED WITH A TOWING DEVICE

(30) Priorité: 24.02.2017 FR 1751526
(43) Date de publication de la demande: 01.01.2020
(73) Titulaire: YTHALES INVEST, 37520 La Riche (FR)
(72) Inventeur: CHERBONNIER, Yves, 37000 Tours (FR)
(74) Mandataire: den Braber, Gérard Paul
(86) Numéro de dépôt international: PCT/FR2018/050453
(87) Numéro de publication internationale: WO 2018/154259

(56) Documents cités:
- WO-A1-01/34415
- FR-A1- 3 024 393
- GB-A- 2 318 563

## Description

### DOMAINE TECHNIQUE

Un aspect de l'invention concerne un module logistique roulant muni d'un dispositif d'attelage. Le module logistique roulant peut être sous forme, par exemple, d'un chariot pour transporter des marchandises.

### ETAT DE LA TECHNIQUE ANTERIEURE

La publication brevet WO 2013/171429 décrit un dispositif de transport muni d'un timon d'attelage ayant une ouverture pouvant accueillir un crochet d'attelage d'un autre dispositif de transport. Ainsi, une liaison de remorquage peut être établie entre l'un et l'autre dispositif de transport. Le timon d'attelage est fixé au dispositif de transport par l'intermédiaire d'un agencement de coulissement de sorte que le timon d'attelage puisse translater entre une position de remorquage en laquelle le timon d'attelage est au maximum sorti du dispositif de transport et une position de rangement en laquelle le timon d'attelage est au maximum rentré dans le dispositif de transport. La publication FR 3024393 décrit un module logistique selon le préambule de la revendication indépendante.

### EXPOSE DE L'INVENTION

Il existe un besoin pour une solution pour établir une liaison de remorquage qui présente des avantages sur le plan des coûts et de la facilité d'utilisation.

Selon un aspect de l'invention, un module logistique roulant comprend :
- une embase ayant une face supérieure apte à supporter des marchandises à transporter,
- un ensemble de roulettes disposé sur une face inférieure de l'embase, et
- un dispositif d'attelage disposé sur la face inférieure de l'embase, le dispositif d'attelage comprenant une fente orientée longitudinalement par rapport à l'embase, la fente étant apte à accueillir de manière coulissante un organe d'attelage faisant saillie d'un timon d'un autre module logistique roulant afin d'établir une liaison de remorquage entre l'un et l'autre module logistique roulant par laquelle le module logistique roulant est apte à tracter l'autre module logistique roulant.

A des fins d'illustration, quelques modes de réalisation de l'invention sont décrits en détail en référence aux dessins annexés. Un tel mode de réalisation peut comprendre un ou plusieurs caractéristiques complémentaires pouvant présenter un ou plusieurs avantages, comme cela apparaîtra dans la description détaillée du mode de réalisation concerné.

### DESCRIPTION SOMMAIRE DES DESSINS

- La figure 1 est une vue schématique en perspective d'un module logistique roulant.
- La figure 2 est une vue schématique de côté du module logistique roulant.
- La figure 3 est une vue schématique de dessous du module logistique roulant.
- La figure 4 est une vue schématique de dessus du module logistique roulant.
- La figure 5 est une vue schématique en perspective d'un timon du module logistique roulant.
- La figure 6 est une vue schématique de dessus du module logistique roulant dont le timon est en une position dressée quasi perpendiculaire.
- La figure 7 est une vue schématique en coupe du module logistique roulant illustré à la figure 6 selon une ligne de coupe A-A indiquée à la figure 6.
- La figure 8 est une vue schématique en coupe d'une partie avant du module logistique roulant indiquée à la figure 7.
- La figure 9 est une vue schématique en coupe du module logistique roulant illustré à la figure 4 selon une ligne de coupe A-A indiquée à la figure 4.
- La figure 10 est une vue schématique en coupe d'une partie avant du module logistique roulant indiquée à la figure 9.
- La figure 11 est une vue schématique en perspective d'un ensemble de deux chariots attelés l'un à l'autre par une liaison de remorquage longitudinalement immobile.
- La figure 12 est une vue schématique de côté de l'ensemble de deux chariots attelés l'un à l'autre par la liaison de remorquage longitudinalement immobile.
- La figure 13 est une vue schématique de dessous de l'ensemble de deux chariots attelés l'un à l'autre par la liaison de remorquage longitudinalement immobile.
- La figure 14 est une vue schématique en perspective d'un ensemble de deux chariots attelés l'un à l'autre par une liaison de remorquage coulissante dans une position de traction.
- La figure 15 est une vue schématique de côté de l'ensemble de deux chariots attelés l'un à l'autre par la liaison de remorquage coulissante dans la position de traction.
- La figure 16 est une vue schématique de dessous de l'ensemble de deux chariots attelés l'un à l'autre par une liaison de remorquage coulissante dans la position de traction.
- La figure 17 est une vue schématique en perspective d'un ensemble de deux chariots attelés l'un à l'autre par une liaison de remorquage coulissante dans une position de butée.
- La figure 18 est une vue schématique de l'ensemble de deux chariots attelés l'un à l'autre par la liaison de remorquage coulissante dans la position de butée.
- La figure 19 est une vue schématique de dessous de l'ensemble de deux chariots attelés l'un à l'autre par la liaison de remorquage coulissante dans la position de butée.

### DESCRIPTION DE QUELQUES MODES DE REALISATION

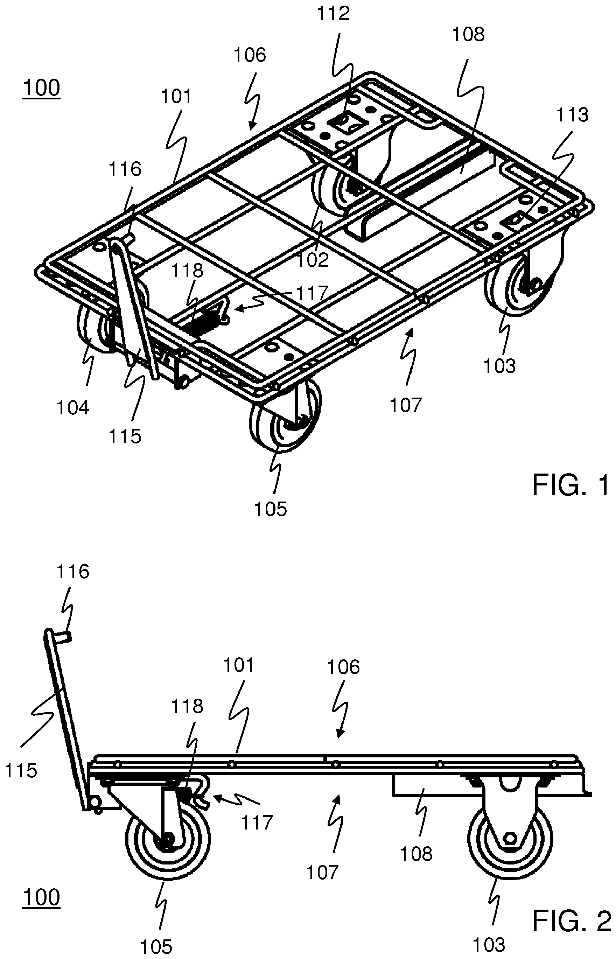

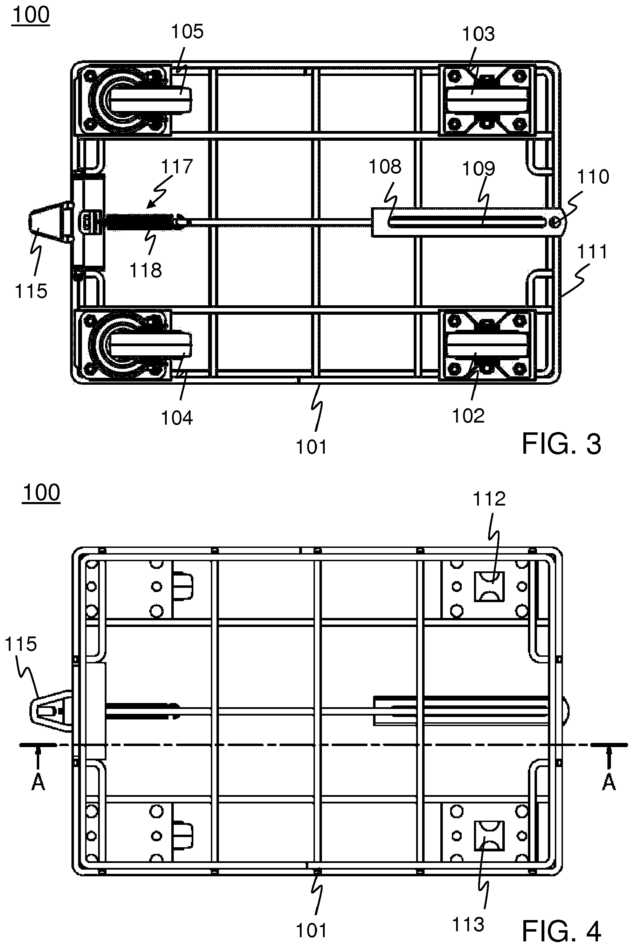

Les figures 1, 2, 3, et 4 illustrent schématiquement un module logistique roulant 100. La figure 1 présente vue schématique en perspective du module logistique roulant 100. La figure 2 présente une vue schématique de côté du module logistique roulant 100. La figure 3 présente une vue schématique de dessous du module logistique roulant 100. La figure 4 est une vue schématique de dessus du module logistique roulant 100. Le module logistique roulant 100 Illustré aux figures 1 à 4 est sous forme d'un chariot et sera ainsi désigné chariot 100 dans ce qui suit pour des raisons de convenance.

Le chariot 100 comprend une embase 101 et un ensemble de roulettes 102, 103, 104, 105. L'embase 101 a une face supérieure 106 apte à supporter des marchandises à transporter. L'ensemble de roulettes 102, 103, 104, 105 est disposé sur une face inférieure 107 de l'embase 101.

Le chariot 100 comprend un dispositif d'attelage 108 disposé sur la face inférieure 107 de l'embase 101. Le dispositif d'attelage 108 comprenant une fente 109 et un orifice d'attelage 110. La fente 109 est orientée longitudinalement par rapport à l'embase 101. L'orifice d'attelage 110 est disposé longitudinalement par rapport à la fente 109. L'orifice d'attelage 110 est situé plus près d'un bord transversal arrière 111 de l'embase 101 que la fente 109. Dans le mode de réalisation illustré aux figures 1 à 4, l'orifice d'attelage 110 se situé au niveau du bord transversal arrière 111, tandis que la fente 109 est couverte par l'embase 101. Le dispositif d'attelage 108 est sous forme d'un profilé ayant une paroi présentant la fente 109. Le profilé est en forme d'U et peut être fixé à l'embase 101 par, par exemple, soudure.

La fente 109 est apte à accueillir de manière coulissante un organe d'attelage faisant saillie d'un timon d'un autre chariot. Cela permet d'établir une liaison de remorquage coulissante entre l'un et l'autre chariot par laquelle le chariot 100 est apte à tracter l'autre chariot. L'autre chariot peut être similaire au chariot 100 illustré aux figures 1 à 4.

L'orifice d'attelage 110 est apte à accueillir de manière longitudinalement immobile l'organe d'attelage faisant saillie du timon de l'autre chariot. Cela permet d'établir une liaison de remorquage longitudinalement immobile entre l'un et l'autre chariot 100 par laquelle le chariot 100 est apte à tracter l'autre chariot 100.

L'embase 101 comprend sur sa face supérieure 102 deux orifices de maintien de roulette 112, 113. Un orifice de maintien de roulette 112 se situe en alignement vertical avec une roulette arrière gauche 102, l'autre orifice de maintien de roulette 113 se situe en alignement vertical avec une roulette arrière droite 103. L'un et l'autre orifice de maintien de roulette 112, 113 peuvent respectivement recevoir une roulette arrière gauche et une roulette arrière droite d'un autre chariot similaire au chariot 100 illustré aux figures 1 à 4 lorsque l'autre chariot est placé sur le chariot 100.

Le chariot 100 comprend un timon 115. Le timon 115 est muni d'un organe d'attelage 116 qui fait saillie du timon 115. Ainsi, le timon 115 peut s'engager dans un dispositif d'attelage d'un autre chariot similaire au chariot 100. illustré aux figures 1 à 4. Dans le mode de réalisation illustré aux figures 1 à 4, l'organe d'attelage 116 est sous forme d'une tige faisant saillie du timon 115.

Le timon 115 est fixé de façon pivotante à l'embase 101. Le timon 115 peut pivoter entre une position d'attelage et une position dressée. Dans la position d'attelage, le timon 115 se trouve dans le prolongement de l'embase 101. Dans la position dressée, le timon 115 est proche d'une position perpendiculaire à l'embase 101. Un dispositif de rappel 117 exerce une force de rappel sur le timon 115 de sorte que, lorsque le timon 115 se trouve dans une position autre que la position dressée, le timon 115 pivote vers la position dressée en l'absence d'obstacle. Dans le mode de réalisation illustré aux figures 1 à 4, le dispositif de rappel 117 comprend un organe résilient 118 en la forme d'un ressort, et sera désigné ressort 118 dans de qui suit pour des raisons de convenance. Une extrémité du ressort 118 est reliée à l'embase 101 ; une autre extrémité est reliée au timon 115.

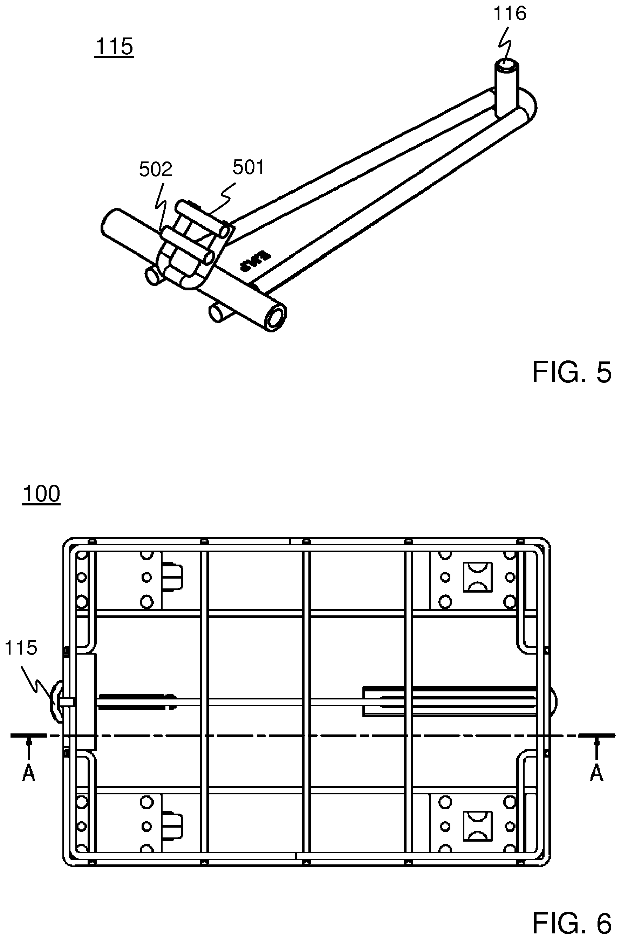

La figure 5 illustre schématiquement le timon 115 du chariot 100. La figure 5 présente une vue schématique en perspective du timon 115. Le timon 115 comprend plusieurs éléments d'ancrage 501, 502 décalés les uns des autres. Dans le mode de réalisation illustré aux figures 1 à 4, les éléments d'ancrage 501, 502 sont sous la forme de tiges et en nombre de deux. Le timon 115 comprend une tige d'ancrage supérieure 501 et une tige d'ancrage inférieure 502, décalées l'une de l'autre. L'extrémité du ressort 118 qui est relié au timon 115, est fixée à l'un des deux tiges d'ancrage 501, 502 du timon 115. La position dressée du timon 115 présente un angle par rapport à l'embase 101 qui varie en fonction de la tige d'ancrage à laquelle cette extrémité du ressort 118 est fixée.

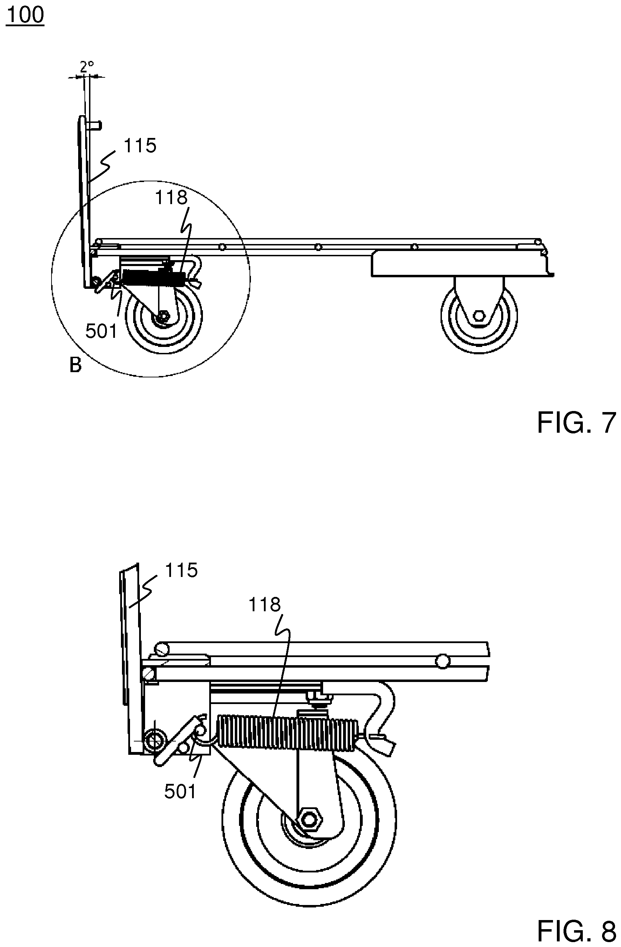

Les figures 6, 7 et 8 illustrent schématiquement le chariot 100 lorsque le timon 115 est en une position dressée quasi perpendiculaire. La figure 6 présente une vue schématique de dessus du chariot 100 lorsque le timon 115 est en la position dressée quasi perpendiculaire. La figure 7 présente une vue schématique en coupe du chariot 100 selon une ligne de coupe A-A indiquée à la figure 6. La figure 8 présente une vue schématique en coupe d'une partie avant du chariot 100 indiquée à la figure 7 par un cercle B.

La position dressée quasi perpendiculaire, illustrée aux figures 7 et 8, est obtenue en fixant l'extrémité du ressort 118, qui est reliée au timon 115, à la tige d'ancrage supérieure 501. La position dressée quasi perpendiculaire facilite un rangement du chariot 100 en réduisant son encombrement. En outre, la position dressée quasi perpendiculaire diminue le risque qu'un opérateur se blesse en heurtant le timon 115.

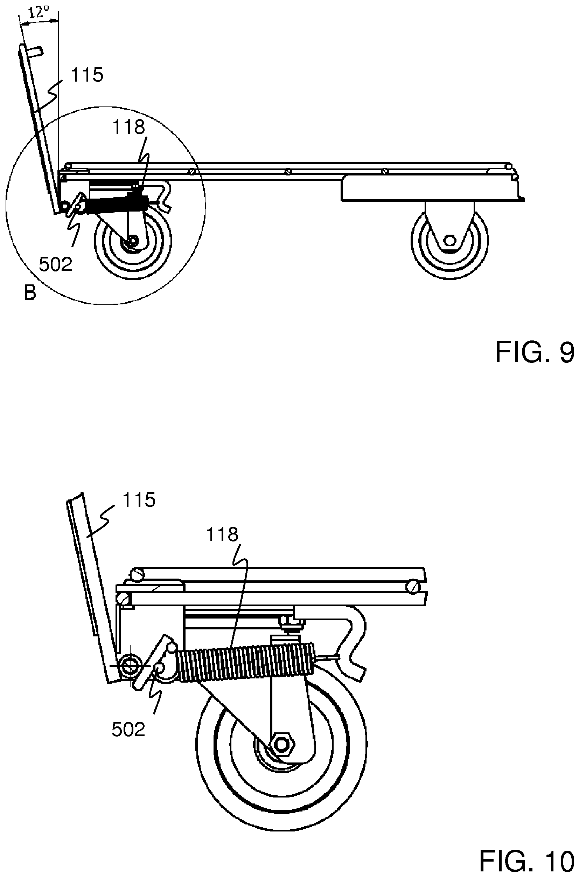

Les figures 9 et 10 illustrent schématiquement le chariot 100 lorsque le timon 115 est en une position dressée et légèrement inclinée. La figure 4 illustre aussi le chariot 100 lorsque le timon 115 est en cette position en présentant une vue schématique de dessus. La figure 9 présente une vue schématique en coupe du chariot 100 lorsque le timon 115 est en la position dressée et légèrement inclinée selon une ligne de coupe A-A indiquée à la figure 4. La figure 10 présente une vue schématique en coupe d'une partie avant du chariot 100 indiquée à la figure 9 par un cercle B.

La position dressée et légèrement inclinée, illustrée aux figures 9 et 10, est obtenue en fixant l'extrémité du ressort 118, qui est reliée au timon 115, à la tige d'ancrage inférieure 502. La position dressée et légèrement inclinée facilite une préhension du timon 115 par un pied d'un opérateur pour, par exemple, emmener le timon 115 en position d'attelage afin d'accoupler le chariot 100 à un autre chariot 100.

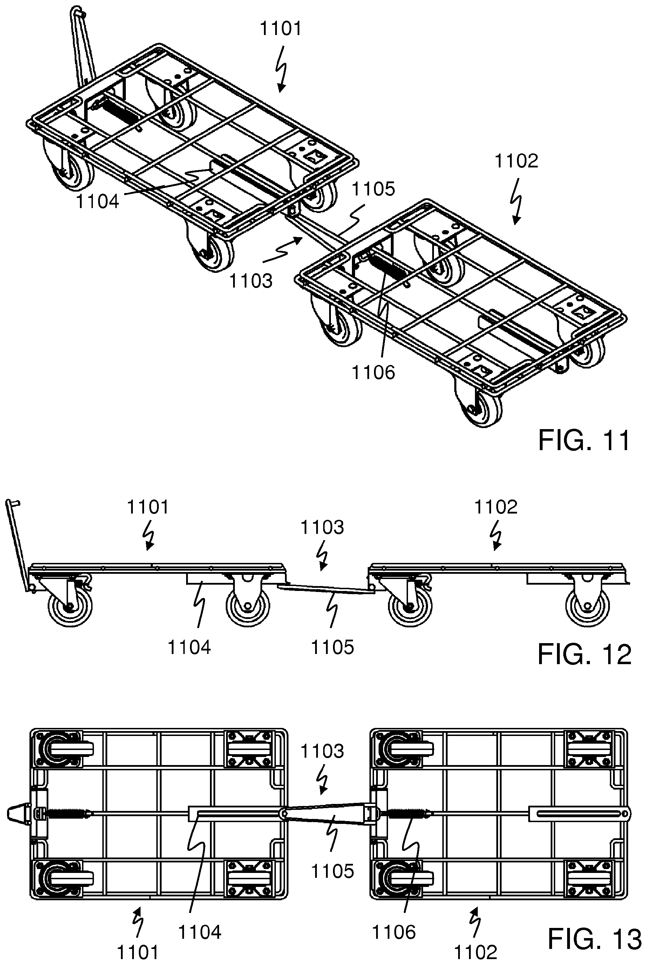

Les figures 11, 12 et 13 illustrent schématiquement un ensemble de deux chariots 1101, 1102 attelés l'un à l'autre par une liaison de remorquage longitudinalement immobile 1103. La figure 11 présente une vue schématique en perspective de cet ensemble de chariots 1101, 1102. La figure 12 présente une vue schématique de côté de l'ensemble de cet ensemble de chariots 1101, 1102. La figure 13 présente une vue schématique de dessous de l'ensemble de cet ensemble de chariots 1101, 1102.

L'un des deux chariots illustrés aux figures 11, 12 et 13 sera désigné chariot tracteur 1101 et l'autre chariot tracté 1102 dans ce qui suit pour des raisons qui apparaîtront ci-après. Le chariot tracteur 1101 est similaire au chariot 100 décrit dans ce qui précède en référence aux figures 1 à 10. Il en va de même pour le chariot tracté 1102. Le chariot tracteur 1101 comprend donc un dispositif d'attelage 1104 similaire au dispositif d'attelage 108 décrit dans ce qui précède en référence aux figures 1 à 10. Le chariot tracté 1102 comprend donc un timon 1105 avec un ressort 1106 respectivement similaire au timon 115 avec le ressort 118 tel que décrits dans ce qui précède en référence aux figures 1 à 10.

La liaison de remorquage longitudinalement immobile 1103, illustrée aux figures 11, 12 et 13, est obtenue en insérant l'organe d'attelage du timon 1105 du chariot tracté 1102 dans l'orifice d'attelage dans le dispositif d'attelage 1104 du chariot tracteur 1101. Pour ce faire, un opérateur amène le timon 1105 du chariot tracté 1102 dans la position d'attelage en appuyant sur le timon 1105 afin de contrer la force de rappel du ressort 1106. Puis, l'opérateur place l'organe d'attelage du timon 1105 juste en dessous l'orifice d'attelage dans le dispositif d'attelage 1104 du chariot tracteur 1101 et en alignement avec l'orifice d'attelage. L'opérateur peut ensuite lâcher le timon 1105. La force de rappel fait que le l'organe d'attelage du timon 1105 pénètre l'orifice d'attelage et s'engage donc avec l'orifice d'attelage. La liaison de remorquage longitudinalement immobile 1103 est établie. Cette opération est facilitée par le fait que l'orifice d'attelage se situe au niveau du bord transversal arrière du chariot tracteur 1101. L'orifice d'attelage est ainsi suffisamment bien visible pour l'opérateur.

La liaison de remorquage longitudinalement immobile 1103, illustrée aux figures 11, 12 et 13, convient lorsque les chariots 1101, 1102 sont utilisés pour transporter des marchandises placées sur les chariots. Les chariots 1101, 1102 restent à une distance fixe l'un de l'autre même en cas d'un freinage brusque.

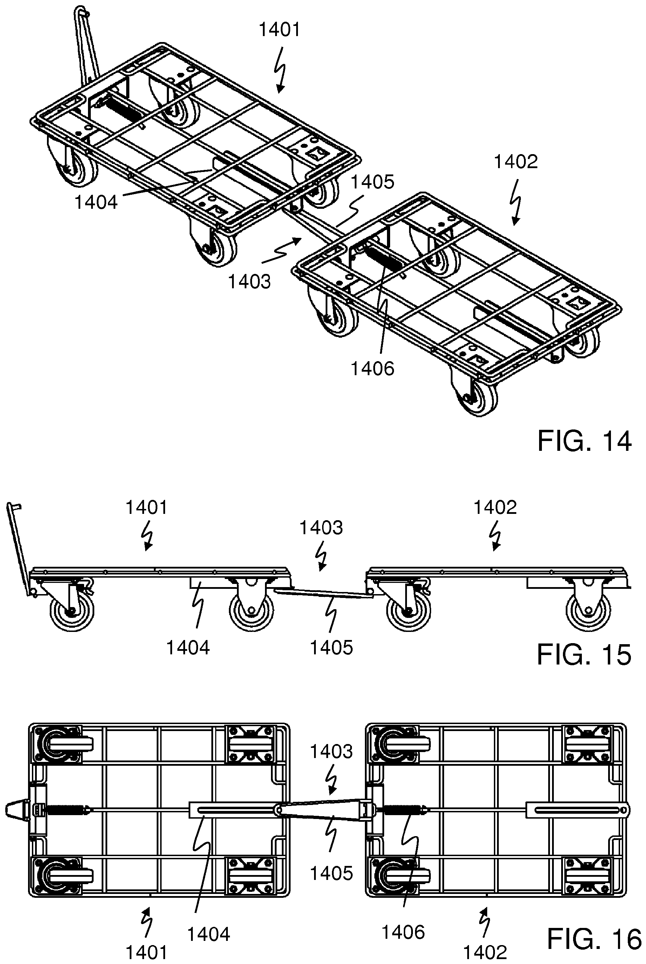

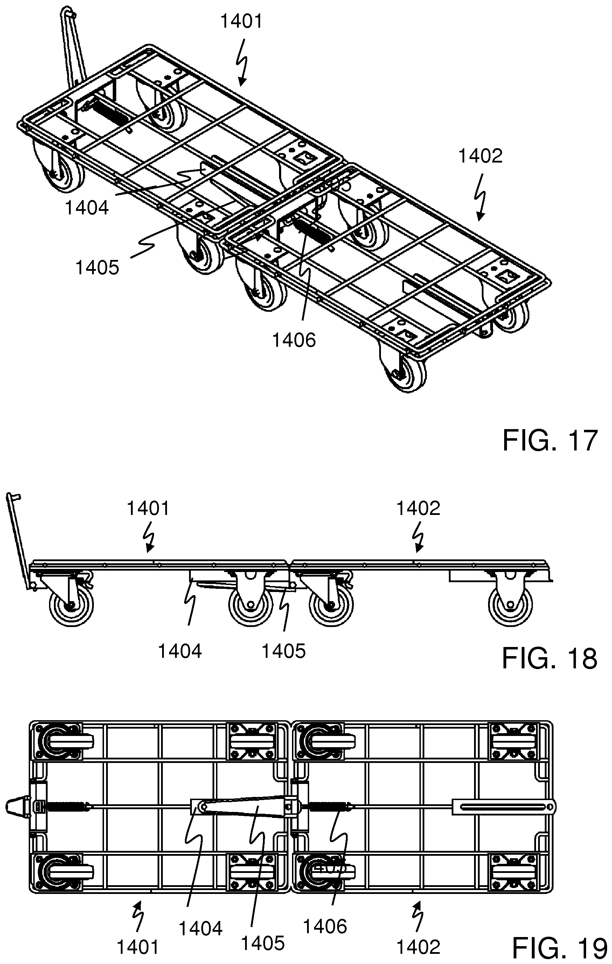

Les figures 14, 15, 16, 17, 18 et 19, illustrent schématiquement un ensemble de deux chariots 1401, 1402 attelés l'un à l'autre par une liaison de remorquage coulissante 1403. Les figures 14, 15 et 16 illustrent schématiquement l'ensemble de deux chariots 1401, 1402 attelés l'un à l'autre par la liaison de remorquage coulissante 1403 dans une position de traction. Les figures 17, 18 et 19, illustrent schématiquement l'ensemble de deux chariots 1401, 1402 attelés l'un à l'autre par la liaison de remorquage coulissante 1403 dans une position de butée.

La figure 14 présente une vue schématique en perspective de cet ensemble de chariots 1401, 1402 lorsque la liaison de remorquage coulissante 1403 est dans la position de traction. La figure 15 présente une vue schématique de côté de cet ensemble de chariots 1401, 1402 lorsque la liaison de remorquage coulissante 1403 est dans la position de traction. La figure 16 présente une vue schématique de dessous de cet ensemble de chariots 1401, 1402 lorsque la liaison de remorquage coulissante 1403 est dans la position de traction.

La figure 17 présente une vue schématique en perspective de cet ensemble de chariots 1401, 1402 lorsque la liaison de remorquage coulissante 1403 est dans la position de butée. La figure 18 présente une vue schématique de côté de cet ensemble de chariots 1401, 1402 lorsque la liaison de remorquage coulissante 1403 est dans la position de butée. La figure 19 présente une vue schématique de dessous de cet ensemble de chariots 1401, 1402 lorsque la liaison de remorquage coulissante 1403 est dans la position de butée.

L'un des deux chariots illustrés aux figures 14 à 19 sera désigné chariot tracteur 1401 et l'autre chariot tracté 1402 dans ce qui suit. Le chariot tracteur 1401 est similaire au chariot 100 décrit dans ce qui précède en référence aux figures 1 à 10. Il en va de même pour le chariot tracté 1402. Le chariot tracteur 1401 comprend donc un dispositif d'attelage 1404 similaire au dispositif d'attelage 108 décrit dans ce qui précède en référence aux figures 1 à 10. Le chariot tracté 1402 comprend donc un timon 1405 avec un ressort 1406 respectivement similaires au timon 115 et au ressort 118 décrits dans ce qui précède.

La liaison de remorquage coulissante 1403 illustrée aux figures 14 à 19 est obtenue en insérant l'organe d'attelage du timon 1405 du chariot tracté 1402 dans la fente dans le dispositif d'attelage 1404 du chariot tracteur 1401. Pour ce faire, un opérateur amène le timon 1405 du chariot tracté 1402 dans la position d'attelage en appuyant sur le timon 1405 afin de contrer la force de rappel du ressort 1406. Puis, l'opérateur place l'organe d'attelage juste en dessous la fente dans le dispositif d'attelage 1404 du chariot tracteur 1401. L'opérateur peut ensuite lâcher le timon 1405. La force de rappel fait que l'organe d'attelage du timon 1405 pénètre la fente et s engage donc avec la fente. La liaison de remorquage coulissante 1403 est établie. Cette opération est facilitée par le fait que la fente, qui n'est pas bien visible pour l'opérateur, ne nécessite pas un alignement longitudinal précis pour établir la liaison de remorquage coulissante 1403.

Lorsque la liaison de remorquage coulissante 1403 est dans la position de traction, illustrée aux figures 14, 15 et 16, l'organe d'attelage du chariot tracté 1402 se situe à une extrémité de la fente qui est le plus près du bord transversal arrière du chariot tracté 1402. L'organe d'attelage se situe à proximité de l'orifice d'attelage. Dans la position de traction, les chariots 1401, 1402 peuvent être utilisés pour transporter des marchandises placées sur les chariots 1401, 1402. Toutefois, les chariots 1401, 1402 ne restent pas nécessairement à une distance fixe l'un de l'autre. Par exemple, en cas d'un freinage brusque le chariot tracté 1402 peut se rapprocher du chariot tracteur 1401 et même heurter le chariot tracteur 1401.

Lorsque la liaison de remorquage coulissante 1403 est dans la position de butée, illustrée aux figures 17, 18 et 19, l'organe d'attelage du chariot tracté 1402 se situe au plus près d'une extrémité de la fente qui est le plus éloignée du bord transversal arrière du chariot tracté 1402. Dans la position de butée, le chariot tracté 1402 et le chariot tracteur 1401 peuvent être en butée l'un contre l'autre comme l'illustrent les figures 17, 18 et 19. Dans la position de butée, l'ensemble de chariots 1401, 1402 a donc un encombrement réduit qui convient à un rangement des chariots 1401, 1402 et à un chargement des chariots 1401, 1402 dans un véhicule de transport tel qu'un camion.

### NOTES

Les modes de réalisation décrits dans ce qui précède en référence aux dessins sont présentés à titre d'illustration. L'invention peut être mise en œuvre de nombreuses façons différentes. Afin d'illustrer cela, quelques alternatives sont indiquées sommairement.

L'invention peut être mise en œuvre dans de nombreux types de produits et procédés logistiques. L'invention peut mise en œuvre dans tout type de module logistique roulant. Dans les modes de réalisations présentés, le module logistique est un chariot. Dans d'autres modes de réalisations, le module logistique peut être, par exemple, un roll conteneur. De façon globale, le terme « module logistique roulant » doit donc être interprété de façon large. Ce terme embrasse toute entité dans laquelle des objets peuvent être placés pour des besoins de transport.

Il existe de nombreuses façons de mettre en œuvre un module logistique roulant conforme à l'invention. Dans les modes de réalisation présentés, un module logistique roulant comprend quatre roulettes. Dans d'autres modes de réalisation, un module logistique roulant peut comprendre moins de roulettes ou plus de quatre roulettes.

Les modes de réalisation décrits dans ce qui précède présentent un autre concept inventif qui est indépendant du concept inventif portant sur le dispositif d'attelage. Cet autre concept inventif concerne une liaison de remorquage qui peut être coulissante ou longitudinalement immobile. L'autre concept inventif peut être mis en œuvre, par exemple, dans un chariot comprenant un timon présentant une fente dans laquelle un crochet d'un autre chariot peut coulisser. Le timon peut en outre présenter un orifice d'attelage disposé longitudinalement par rapport à la fente. Un tel orifice peut être réalisé, par exemple, en ajoutant une tige transversale à un timon en forme d'U allongé, la tige étant positionnée près d'une extrémité du timon afin de former l'orifice d'attelage à cette extrémité.

Les remarques qui précèdent montrent que la description détaillée en référence aux figures, illustre l'invention plutôt qu'elle ne la limite. Les signes de références n'ont aucun caractère limitatif. Les verbes « comprendre » et « comporter » n'excluent pas la présence d'autres éléments ou d'autres étapes que ceux listés dans les revendications. Le mot « un » ou « une » précédant un élément ou une étape n'exclu pas la présence d'une pluralité de tels éléments ou de telles étapes.

## Revendications

1. Module logistique roulant (100) comprenant :
- une embase (101) ayant une face supérieure (106) apte à supporter des marchandises à transporter,
- un ensemble de roulettes (102-105) disposé sur une face inférieure (107) de l'embase, et
- un dispositif d'attelage (108) disposé sur la face inférieure de l'embase, le dispositif d'attelage comprenant une fente (109) orientée longitudinalement par rapport à l'embase, la fente étant apte à accueillir de manière coulissante un organe d'attelage (116), **caractérisé en ce que** l'organe d'attelage fait saillie d'un timon (115) d'un autre module logistique roulant afin d'établir une liaison de remorquage coulissante (1403) entre l'un et l'autre module logistique roulant par laquelle le module logistique roulant est apte à tracter l'autre module logistique roulant.

2. Module logistique roulant selon la revendication 1, dans lequel le dispositif d'attelage (108) comprend en outre un orifice d'attelage (110) disposé longitudinalement par rapport à la fente (109), l'orifice d'attelage étant apte à accueillir de manière longitudinalement immobile l'organe d'attelage (116) faisant saillie du timon (115) de l'autre module logistique roulant afin d'établir une liaison de remorquage longitudinalement immobile (1103) entre l'un et l'autre module logistique roulant par laquelle le module logistique roulant est apte à tracter l'autre module logistique roulant.

3. Module logistique roulant selon la revendication 2, dans lequel l'orifice d'attelage (110) est situé plus près d'un bord transversal (111) de l'embase (101) que la fente (109).

4. Module logistique roulant selon l'une quelconque des revendications 1 à 3, dans lequel le dispositif d'attelage (108) comprend un profilé ayant une paroi présentant la fente (109).

5. Module logistique roulant selon l'une quelconque des revendications 1 à 4, comprenant un timon (115) muni d'un organe d'attelage (116) qui fait saillie du timon, le timon étant apte à s'engager dans un dispositif d'attelage (108) d'un autre module logistique roulant similaire au module logistique roulant selon l'une quelconque des revendications 1 à 4.

6. Module logistique roulant selon la revendication 5, dans lequel l'organe d'attelage (116) est sous forme d'une tige faisant saillie du timon (115).

7. Module logistique roulant selon l'une quelconque des revendications 5 et 6, dans lequel le timon (115) est fixé de façon pivotante à l'embase (101), le timon pouvant pivoter entre une position d'attelage, dans laquelle le timon se trouve dans le prolongement de l'embase, et une position dressée, dans laquelle le timon est proche d'une position perpendiculaire à l'embase.

8. Module logistique roulant selon la revendication 7, comprenant un dispositif de rappel (117) apte à exercer une force de rappel sur le timon (115) de sorte que, lorsque le timon se trouve dans une position autre que la position dressée, le timon pivote vers la position dressée en l'absence d'obstacle.

9. Module logistique roulant selon la revendication 8, dans lequel le timon (115) comprend plusieurs éléments d'ancrage (501, 502) décalés les uns des autres, le dispositif de rappel (117) comprenant un organe résilient (118) dont une extrémité est reliée à l'embase (101) et une autre extrémité est fixée à l'un des éléments d'ancrage du timon, la position dressée du timon présentant un angle par rapport à l'embase qui varie en fonction de l'élément d'ancrage à laquelle l'autre extrémité de l'organe résilient est fixée.

10. Module logistique roulant selon l'une quelconque des revendications 1 à 9, dans lequel l'embase (101) comprend sur sa face supérieure (106) au moins un orifice de maintien de roulette (112, 113) apte à recevoir une roulette (102-105) d'un autre module logistique roulant similaire au module logistique roulant selon l'une quelconque des revendications 1 à 9 lorsque l'autre module logistique roulant est placé sur le module logistique roulant.

## Patentansprüche

1. Fahrbares Logistikmodul (100), umfassend:
- eine Grundplatte (101), die eine Oberseite (106) aufweist, die imstande ist, zu transportierende Waren zu tragen,
- eine Rolleneinheit (102-105), die auf einer Unterseite (107) der Grundplatte angeordnet ist, und
- eine Anhängevorrichtung (108), die auf der Unterseite der Grundplatte angeordnet ist, wobei die Anhängevorrichtung einen Schlitz (109) umfasst, der in Bezug auf die Grundplatte längsgerichtet orientiert ist, wobei der Schlitz imstande ist, ein Anhängeorgan (116) verschiebbar aufzunehmen, **dadurch gekennzeichnet, dass** das Anhängeorgan aus einer Deichsel (115) eines anderen fahrbaren Logistikmoduls hervorsteht, um eine verschiebbare Schleppverbindung (1403) zwischen dem einen und dem anderen fahrbaren Logistikmodul zu realisieren, durch welches das fahrbare Logistikmodul imstande ist, das andere fahrbare Logistikmodul zu ziehen.

2. Fahrbares Logistikmodul nach Anspruch 1, wobei die Anhängevorrichtung (108) weiter eine Anhängeöffnung (110) umfasst, die in Bezug auf den Schlitz (109) längsgerichtet angeordnet ist, wobei die Anhängeöffnung imstande ist, das Anhängeorgan (116), das aus der Deichsel (115) des anderen fahrbaren Logistikmoduls hervorsteht, in längsgerichtet unbeweglicher Weise aufzunehmen, um eine längsgerichtet unbewegliche Schleppverbindung (1103) zwischen dem einen und dem anderen fahrbaren Logistikmodul zu erstellen, durch welches das fahrbare Logistikmodul imstande ist, das andere fahrbare Logistikmodul zu ziehen.

3. Fahrbares Logistikmodul nach Anspruch 2, wobei sich die Anhängeöffnung (110) näher zu einer Querkante (111) der Grundplatte (101) befindet, als der Schlitz (109).

4. Fahrbares Logistikmodul nach einem der Ansprüche 1 bis 3, wobei die Anhängevorrichtung (108) ein Profil umfasst, das eine Wand aufweist, die den Schlitz (109) vorweist.

5. Fahrbares Logistikmodul nach einem der Ansprüche 1 bis 4, eine Deichsel (115) umfassend, die mit einem Anhängeorgan (116) versehen ist, das aus der Deichsel hervorsteht, wobei die Deichsel imstande ist, in eine Anhängevorrichtung (108) eines anderen fahrbaren Logistikmoduls ähnlich dem fahrbaren Logistikmodul nach einem der Ansprüche 1 bis 4 einzugreifen.

6. Fahrbares Logistikmodul nach Anspruch 5, wobei das Anhängeorgan (116) in Form einer Stange ist die aus der Deichsel (115) hervorsteht.

7. Fahrbares Logistikmodul nach einem der Ansprüche 5 und 6, wobei die Deichsel (115) schwenkbar an der Grundplatte (101) befestigt ist, wobei die Deichsel zwischen einer Anhängeposition, in der sich die Deichsel in der Verlängerung der Grundplatte befindet, und einer aufgerichteten Position, in der die Deichsel nahe einer Position senkrecht zur Grundplatte ist, schwenken kann.

8. Fahrbares Logistikmodul nach Anspruch 7, eine Rückstellvorrichtung (117) umfassend, die imstande ist, eine Rückstellkraft auf die Deichsel (115) auszuüben, sodass die Deichsel bei Abwesenheit eines Hindernisses in die aufgerichtete Position schwenkt, wenn sich die Deichsel in einer anderen Position als der aufgerichteten Position befindet.

9. Fahrbares Logistikmodul nach Anspruch 8, wobei die Deichsel (115) mehrere gegeneinander versetzte Verankerungselemente (501, 502) umfasst, wobei die Rückstellvorrichtung (117) ein schlagfestes Organ (118) umfasst, von dem ein Ende mit der Grundplatte (101) verbunden ist und ein anderes Ende an dem einen der Verankerungselemente der Deichsel befestigt ist, wobei die aufgerichtete Position der Deichsel einen Winkel in Bezug auf die Grundplatte vorweist, der in Abhängigkeit von dem Verankerungselement, an dem das andere Ende des schlagfesten Organs befestigt ist, variiert.

10. Fahrbares Logistikmodul nach einem der Ansprüche 1 bis 9, wobei die Grundplatte (101) auf ihrer Oberseite (106) mindestens eine Rollenhalteöffnung (112, 113) umfasst, die imstande ist, eine Rolle (102-105) eines anderen fahrbaren Logistikmoduls ähnlich dem fahrbaren Logistikmodul nach einem der Ansprüche 1 bis 9 aufzunehmen, wenn das andere fahrbare Logistikmodul auf dem fahrbaren Logistikmodul platziert ist.

## Claims

1. A wheeled logistical module (100) comprising:
- a base (101) having an upper face (106) capable of supporting goods to be transported,
- a caster assembly (102-105) disposed on a lower face (107) of the base, and
- a towing device (108) disposed on the lower face of the base, the towing device comprising a slot (109) oriented longitudinally relative to the base, the slot being capable of slidably accommodating a towing member (116), **characterised in that** the towing member protrudes from a drawbar (115) of another wheeled logistical module in order to establish a sliding tow connection (1403) between the two wheeled logistical modules by which the wheeled logistical module is able to tow the other wheeled logistical module.

2. The wheeled logistical module according to claim 1, wherein the towing device (108) further comprises a towing orifice (110) disposed longitudinally relative to the slot (109), the towing orifice being able to accommodate, longitudinally stationary, the towing member (116) protruding from the drawbar (115) of the other wheeled logistical module in order to establish a longitudinally stationary tow connection (1103) between the two wheeled logistical modules by which the wheeled logistical module is able to tow the other wheeled logistical module.

3. The wheeled logistical module according to claim 2, wherein the towing orifice (110) is located closer to a transverse edge (111) of the base (101) than the slot (109).

4. The wheeled logistical module according to any one of claims 1 to 3, wherein the towing device (108) comprises a profile having a wall having the slot (109).

5. The wheeled logistical module according to any one of claims 1 to 4, comprising a drawbar (115) provided with a towing member (116) which protrudes from the drawbar, the drawbar being able to engage in a towing device (108) of another wheeled logistical module similar to the wheeled logistical module according to any one of claims 1 to 4.

6. The wheeled logistical module according to claim 5, wherein the towing member (116) is in the form of a rod protruding from the drawbar (115).

7. The wheeled logistical module according to any one of claims 5 and 6, wherein the drawbar (115) is pivotally fastened to the base (101), the drawbar being able to pivot between a towing position, wherein the drawbar is in the extension of the base, and an upright position, wherein the drawbar is close to a position perpendicular to the base.

8. The wheeled logistical module according to claim 7, comprising a return device (117) capable of exerting a return force on the drawbar (115) so that, when the drawbar is in a position other than the upright position, the drawbar pivots to the upright position in the absence of obstacles.

9. The wheeled logistical module according to claim 8, wherein the drawbar (115) comprises several anchoring elements (501, 502) offset from each other, the return device (117) comprising a resilient member (118) one end of which is linked to the base (101) and another end is fastened to one of the anchoring elements of the drawbar, the upright position of the drawbar having an angle relative to the base which varies depending on the anchoring element to which is fastened the other end of the resilient member.

10. The wheeled logistical module according to any one of claims 1 to 9, wherein the base (101) comprises on its upper face (106) at least one caster holding orifice (112, 113) capable of receiving a caster (102-105) of another wheeled logistical module similar to the wheeled logistical module according to any one of claims 1 to 9 when the other wheeled logistical module is placed on the wheeled logistical module.
